(19)

Europäisches
Patentamt

European
Patent Office

Office européen
des brevets

(11) **EP 2 806 289 A1**

(12) **EUROPEAN PATENT APPLICATION**

(43) Date of publication:
26.11.2014 Bulletin 2014/48

(51) Int Cl.:
**G01S 19/33** (2010.01)    **G01S 19/42** (2010.01)

(21) Application number: **14165622.3**

(22) Date of filing: **23.04.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.05.2013 CN 201310196978
05.03.2014 US 201414197424**

(71) Applicant: **O2 Micro, Inc.**
**Santa Clara, CA 95054 (US)**

(72) Inventors:
• **Zou, Jinghua**
**P.R.C. 610041 Chengdu, Sichuan (CN)**
• **Zhang, Weihua**
**P.R.C. 610041 Chengdu, Sichuan (CN)**
• **Gou, Juan**
**P.R.C. 610041 Chengdu, Sichuan (CN)**

(74) Representative: **Lippert, Stachow & Partner
Patentanwälte
Postfach 30 02 08
51412 Bergisch Gladbach (DE)**

(54) **Module, device and method for positioning**

(57)     A positioning module is disclosed. The Positioning module includes a satellite selection module and a filter. The satellite selection module is configured for selecting one or more positioning satellites among a plurality of satellites of one or more satellite navigation systems and outputting satellite information of the one or more positioning satellites. Filter coupled to the satellite selection module is configured for receiving the satellite information of the one or more positioning satellites, and calculating a position information of the positioning module and/or a device comprising the positioning module.

FIG. 5

EP 2 806 289 A1

**Description**

RELATED APPLICATIONS

FIELD OF THE PRESENT TEACHING

The disclosure generally relates to the field of navigation technology, and specifically, the disclosure relates to a positioning module, a positioning device, and a method of satellite positioning.

BACKGROUND

At present time, there are four sets of satellite navigation systems in the world: BeiDou (Compass) satellite navigation system, Global Positioning System (GPS), Global Navigation Satellite System (GLONASS) satellite navigation system, and Galileo satellite navigation system developed by China, United States, Russia, and Europe, respectively. The BeiDou satellite navigation system is self-developed by China and can work independently from other satellite navigation systems.

Conventionally, a receiver can only receive satellite signals from one single satellite navigation system to perform positioning or navigation. However, such a conventional receiver has relatively low positioning accuracy.

SUMMARY

In one embodiment, a positioning module is disclosed. Positioning module includes a satellite selection module and a filter. The satellite selection module is configured for selecting one or more positioning satellites from a plurality of satellites of one or more satellite navigation systems and outputting satellite information of the one or more positioning satellites. The filter coupled to the satellite selection module is configured for receiving the satellite information of the one or more positioning satellites, and calculating the position information of positioning module and/or a device comprising the positioning module based on a filter algorithm. The satellite information may comprise one or more of signal frequency, pseudo-range, position coordinates, and velocity information of a corresponding positioning satellite. The filter may comprise a Karlman filter, wherein calculating the position information of positioning module may comprise calculating the position information based on a Karlman filter algorithm. The Karlman filter may comprise an initial state calculation module, configured for calculating an initial state vector and an error covariance of Karlman filter according to the satellite information of the one or more positioning satellites and a Karlman filter calculation module, configured for calculating a state vector at a present time based on Karlman filter algorithm, wherein the state vector may comprise the position information of positioning module. The state vector may comprise a location information of positioning module, a velocity information of positioning module, displacements of positioning module corresponding to clock biases between positioning module and the plurality of satellite navigation systems, and a timing variation rate of a clock in positioning module. The Karlman filter calculation module may update the state vector at the present time based on Karlman filter algorithm according to a state vector at a previous time and an observation vector at the present time, wherein the observation vector may comprise pseudo-ranges of the one or more positioning satellites and component of a velocity vector of positioning module from positioning module to the one or more positioning satellites. The observation vector may have 2*N dimensions, N being the number of positioning satellites.

In another embodiment, a positioning device is disclosed. Positioning device includes: a radio frequency (RF) module, configured for mixing frequencies of a plurality of received satellite signals with a frequency of a signal generated by positioning device to generate a plurality of intermediate frequency (IF) signals, wherein the plurality of received satellite signals are transmitted by one or more satellites from one or more satellite navigation systems; a baseband signal processing module, configured for processing the IF signals, calculating the satellite information of the one or more satellites, and classifying the plurality of received satellite signals; and a positioning module coupled to the baseband signal processing module, configured for calculating the position information of the positioning device. The positioning module may be configured for selecting one or more positioning satellites from the one or more satellites according to a classification of the plurality of satellite signals. The positioning module may be a positioning module according to the invention. The positioning information of positioning device may comprise calculating the positioning information based on a Karlman filter algorithm according to the satellite information of the one or more positioning satellites. The positioning module may comprise a satellite selection module, configured for selecting the positioning satellites from the one or more satellites and outputting the satellite information, wherein the satellite information may comprise one or more of signal frequency, pseudo-range, position coordinates, and velocity information of a corresponding positioning satellite, and a filter coupled to the satellite selection module, configured for receiving the satellite information of the one or more positioning satellites and calculating the position information of positioning device. The filter may comprise a Karlman filter and may comprise an initial state calculation module, configured for calculating an initial state vector and an error covariance of Karlman filter according to the satellite information of the one or more positioning satellites, and a filter calculation module, configured for calculating a state vector at a present time based on a Karlman filter algorithm, wherein the state vector may comprise the position information of positioning device. The state vector may comprise a location information of positioning device, a velocity information of positioning device, displacements of positioning device corresponding to clock biases between positioning device and the one or more satellite navigation systems, and a timing variation rate of a clock in positioning device. The state vector may have (7+M) dimensions, M being the number of satellite navigation systems from which the one or more positioning satellites are selected. The filter calculation module may update the state vector at the present time based on Karlman filter algorithm according to a state vector at a previous time and an observation vector at the present time, wherein the observation vector may comprise pseudo-ranges of the one or more positioning satellites and a component of a velocity vector of positioning module from positioning module to the one or more positioning satellites. The observation vector may have 2*N dimensions, N being the number of positioning satellites.

In still another embodiment, a method for positioning a positioning device is disclosed. The method includes: receiving a plurality of satellite signals, wherein the plurality of satellite signals are transmitted by one or more satellites from one or more satellite navigation systems; calculating, by capturing and tracking the satellite signals, a satellite information of the one or more satellites and classifying the plurality of satellite signals; selecting one or more positioning satellites from the one or more satellites according to a classification of the plurality of satellite signals; and calculating a position information of the positioning device. Calculating the position information may comprise calculating the position information based on a Karlman filter algorithm according to the satellite information of the one or more positioning satellites, determining an observation vector at a present time of a Karlman filter, wherein the observation vector may comprise pseudo-ranges of the one or more positioning satellites and component of a velocity vector of the one or more positioning satellites from positioning module device to the positioning satellites, and updating a state vector at the present time based on Karlman filter algorithm according to a state vector at a previous time and the observation vector at the present time, wherein the state vector may comprise a location information of positioning device, velocity information of positioning device, displacements of positioning device corresponding to clock biases between positioning device and the one or more satellites navigation systems, and a timing variation rate of a clock in the positioning device. Updating the state vector at the present time based on the Karlman filter algorithm according to the state vector at the previous time and the observation vector at the present time may comprise calculating an estimated value of the state vector at the present time according to the state vector at the previous time, calculating an estimated value of an error covariance at the present time according to an error covariance at the previous time, calculating a Karlman filter gain according to the estimated value of the error covariance at the present time, and updating the state vector at the present time according to the Karlman filter gain, the estimated value of the state vector at the present time, and the observation vector at the present time. The step of calculating the position information of positioning device may comprise updating the error covariance at the present time according to the Karlman filter gain and the estimated value of the error covariance at the present time. The positioning method may comprise calculating a state vector at a next time according to the error covariance at the present time and the state vector at the present time. The observation vector of the positioning method may have 2*N dimensions, N bring the number of the positioning satellites. The state vector of the positioning method may have (7+M) dimensions, M being the number of satellites navigation systems from which the one or more positioning satellites are selected.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is a block diagram illustrating an exemplary receiver, in accordance with one embodiment of the present teaching;
FIG. 2 is a flowchart illustrating a method for navigation, in accordance with one embodiment of the present teaching;
FIG. 3 is a flowchart illustrating a process in a method for navigation, in accordance with one embodiment of the present teaching; and
FIG. 4 is a flowchart illustrating an exemplary method for navigation, in accordance with one embodiment of the present teaching.
FIG. 5 shows an exemplary block diagram of a positioning device, in accordance with one embodiment of the present teaching;
FIG. 6 shows an exemplary block diagram of a positioning module in a positioning device, in accordance with one embodiment of the present teaching;

FIG.7 shows a flowchart illustrating a method for positioning based on Karlman filter algorithm in a satellite navigation system, in accordance with one embodiment of the present teaching;

FIG. 8 shows a flowchart illustrating a method for satellite positioning, in accordance with one embodiment of the present teaching;

FIG. 9 is a graph showing a comparison of tracks calculated based on Karlman filter algorithm in a single GPS satellite navigation system and in a dual-mode satellite navigation system, respectively.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

The navigation systems in present teaching may include the Beidou (Compass) satellite navigation system, the Global Positioning System (GPS), the GLONASS satellite navigation system, the Galileo satellite navigation system, or any other satellite navigation system available today or in the future. Each satellite navigation system may include one or more satellites. For example, Beidou satellite navigation system presently includes 9 Beidou satellites, and may include up to 30 available satellites by 2020. In the present teaching, the satellites transmitting signals which can be received by a receiver are referred to as positioning satellites. The signals sent from the positioning satellites are referred to as satellite signals. For example, if the receiver can receive Beidou satellite signals from 6 Beidou satellites, these 6 Beidou satellites are called Beidou positioning satellites.

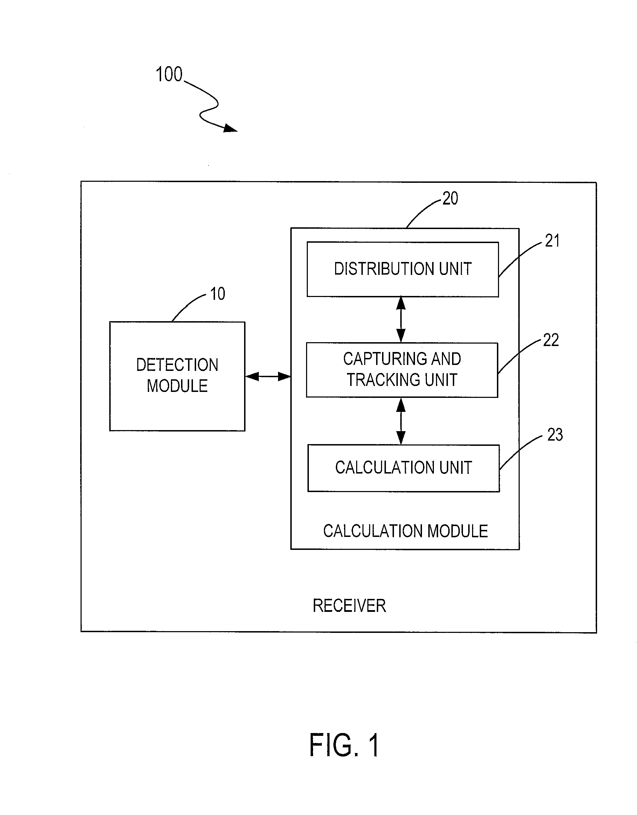

FIG. 1 illustrates a block diagram of a receiver 100, in accordance with one embodiment of the present teaching. In this embodiment, receiver 100 includes a detection module 10 and a calculation module 20. Detection module 10 may be configured for detecting and/or receiving one or more signals directed to navigation and determining one or more satellite navigation systems from where the one or more signals are sent. The one or more signals may be satellite signals sent from satellites in the one or more satellite navigation systems.

Detection module 10 may detect if the received satellite signals are sent from one or more satellite navigation systems. For example, detection module 10 may detect the Beidou satellite signals, the GPS satellite signals and the Galileo satellite signals, which use Code Division Multiple Access (CDMA) technology, according to an I-branch ordinary ranging code of the received satellite signals and may detect the GLONASS satellite signals, which use Frequency Division Multiple Access (FDMA) technology according to a frequency of the received satellite signals.

Calculation module 20 may be coupled to detection module 10 and configured for obtaining or calculating navigation information at receiver 100, based on the one or more signals. The navigation information may be associated with the determined one or more navigation systems. Calculation module 20 may be further configured for calculating a displacement of receiver 100 corresponding to a clock bias between receiver 100 and a satellite navigation system, i.e., the displacement corresponding to the clock bias between the local clock of receiver 100 and the clock of the first satellite navigation system, based on the received satellite signals. For example, calculation module 20 can calculate each displacement of receiver 100 corresponding to each clock bias between receiver 100 and each satellite navigation system, based on the received satellite signals. Calculation module 20, in this example, includes a distribution unit 21, a capturing and tracking unit 22, and a calculation unit 23.

Distribution unit 21 may be configured for distributing recourses for the positioning satellites in each detected satellite navigation system. Capturing and tracking unit 22 may be configured for capturing and tracking the positioning satellites with resources distributed by distribution unit 21 to obtain satellite information from the positioning satellites. The satellite information provided by the satellites may include pseudo range, position coordinate, velocity information and frequency information of the corresponding positioning satellites. Calculation unit 23 may be configured for calculating the navigation information of the receiver, and each displacement of the receiver corresponding to each clock bias between receiver 100 and each satellite navigation system.

Calculation module 20 can further include an identification unit (not shown in FIG. 1). The identification unit may be configured for identifying redundant positioning satellites in each satellite navigation system according to the received satellite information. For example, the identification unit may identify the positioning satellites that provide the satellite information (e.g., pseudo range and Doppler measurement) with many errors as the redundant satellites. The satellite signals from the identified redundant satellites may be abandoned and not used to calculate the position of the receiver. In one embodiment, the identification unit may identify the redundant satellites using Receiver Autonomous Integrity Monitoring (RAIM) method. The identification unit can also identify the redundant satellites according to the output parameters of each receiver loop, e.g., the variation of the carrier frequency, the variation of the pseudo range measurement, etc.

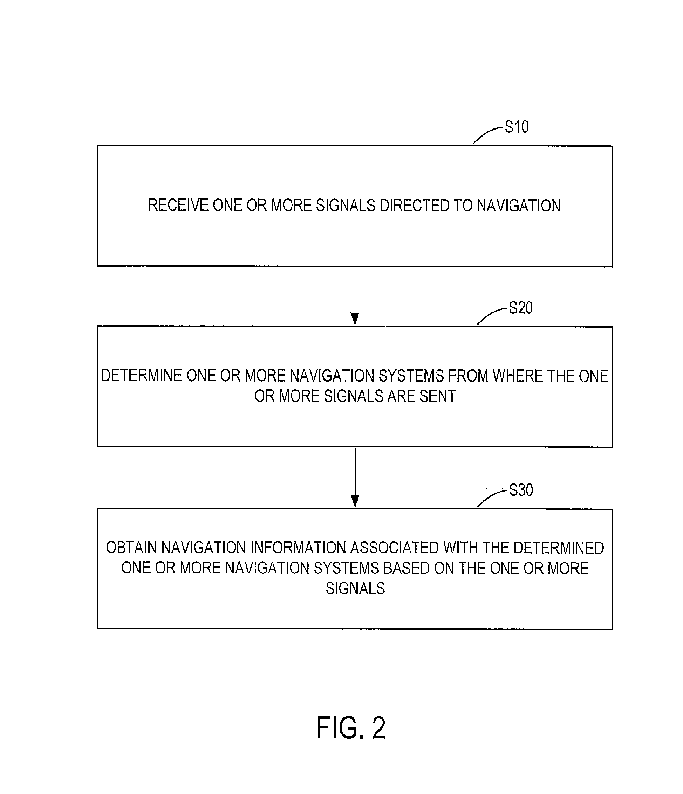

FIG. 2 illustrates a method for navigation, in accordance with one embodiment of the present teaching. FIG. 2 is illustrated in combination with FIG. 1. Although specific processes are illustrated in FIG. 2, such processes are examples. That is, the present teaching is well suited to perform variations of the processes illustrated in FIG. 2.

At S10, a detection module 10 in receiver 100 may receive one or more signals directed to navigation. At S20, one or more navigation systems may be determined. The one or more signals may be sent from the one or more navigation systems. For example, the one or more navigation systems may be different satellite navigation systems. At S30, navigation information may be obtained based on the one or more signals. The navigation information may be associated with the determined one or more navigation systems. Calculation module 20 in receiver 100 may calculate the navigation information. Calculation module 20 may also calculate each displacement of receiver 100 corresponding to each clock bias between the receiver and each satellite navigation system according to the satellite information received from the detected satellite navigation systems, when the satellite signals are received from more than one satellite navigation systems.

The satellite information provided by the positioning satellites can include the pseudo-range, position coordinate information, frequency information, Doppler information, ephemeris information, and velocity information of the positioning satellites, etc. The navigation information of receiver 100 may include the position coordinate information of receiver 100 and the velocity information of receiver 100.

Since the GLONASS satellite signals are based on FDMA technology, the GLONASS satellite signals can be distinguished, at S10, according to frequency. On the other hand, because the Beidou satellite signals, the GPS satellite signals and the Galileo satellite signals are based on CDMA technology, receiver 100, at S10, can detect if the received satellite signals are from one or more satellite signals. Receiver 100 may distinguish the GPS satellite signals, the Beidou satellite signals, and the Galileo satellite signals from the received satellite signals by using I-branch ordinary ranging code.

In one embodiment, the Beidou satellite signals and the GPS satellite signals can be expressed by an equation as the following:

$$S^{\,j} = AC^{\,j}D^{\,j}\cos(\,2\pi f\,t + \theta^{\,j}\,)\,; \qquad (1)$$

wherein, $S^j$ represents a satellite signal transmitted from a satellite with an ID of j, A represents an amplitude of an ordinary ranging code modulated in I-branch, C represents the I-branch ordinary ranging code, D represents navigation message data in the I-branch, f represents the carrier frequency of the satellite signals, t represents a transmitting time of the satellite signals, $\theta$ represents an initial carrier phase of each satellite signal, the value of $\theta$ can be different for each satellite. The above-mentioned parameters can be all known to the corresponding satellite. The parameters can be obtained at receiver 100 by capturing and tracking the satellite signals. The value of f in each satellite navigation system may be different. Because the Beidou satellite signals, the GPS satellite signals and the Galileo satellite signals can be based on CDMA technology, the transmitting frequencies of the three satellite navigation systems in the same signal segment may be the same.

A pseudo-random number (PRN) sequence for each Beidou satellite, GPS satellite, and Galileo satellite may be unique. Therefore, the type of satellite can be determined based on the PRN sequence, i.e., the parameter C in equation (1). For receiver 100, the available satellite signals can be captured and identified by reestablishing the pseudo-random number sequence of the satellites.

For example, the method for establishing the PRN sequence can be obtained from an Interface Control Document (ICD) of each satellite navigation system. Therefore, receiver 100 may search for possible receiving frequency of the satellite signal and the PRN information. After receiving a satellite signal from a satellite, receiver 100 can obtain the navigation message data D in the I-branch and the initial carrier phase $\theta$ of the satellite signal. A baseband channel may establish a PRN sequence in accordance with the PRN sequence of the satellite. Receiver 100 may capture and track the satellite. If the satellite is captured and tracked successfully, the present satellite signal can be included in the input signals. In addition, when the established PRN sequence corresponds with the PRN sequence of the captured and tracked satellite signals, there is high correlation between the CDMA signals. For example, when the established PRN sequence is the same as the PRN sequence of the captured and tracked satellite signals, a correlation peak occurs between the CDMA signals. Thus, receiver 100 can detect if the satellite is captured successfully or not by detecting the correlation peak of the CDMA signals based on a capturing threshold.

The satellite can broadcast two kinds of ranging code, which are encoded on the I-branch and Q branch of the satellite signals, respectively. For the Beidou satellite navigation system for example, the I-branch of the satellite signals is the civilian ordinary ranging code, and the Q branch of the satellite signals is professional accurate ranging code (for example, for military use), and receiver 100 can only receive the Q branch after being authorized.

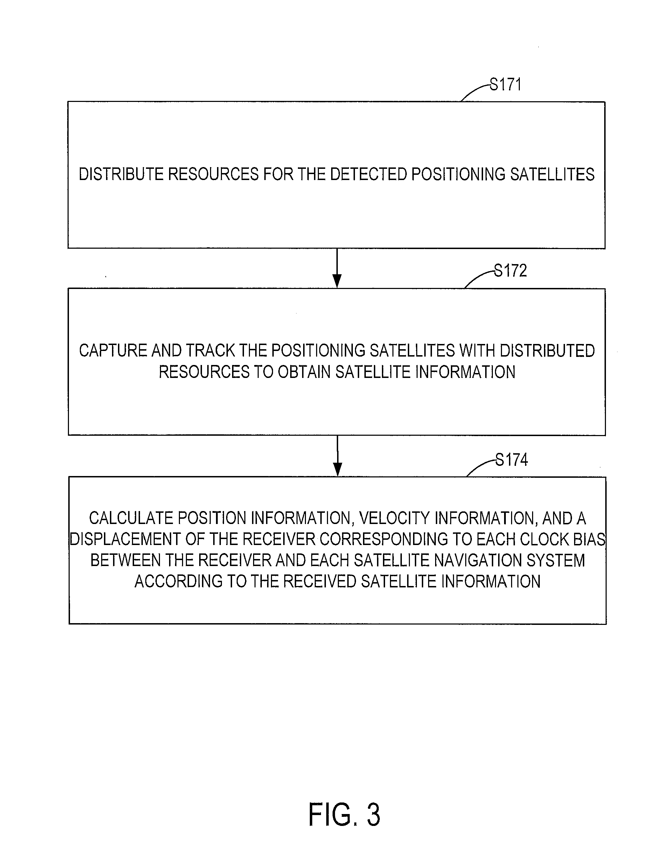

A detailed method for calculating position information of receiver 100 is be described herein with reference to FIG. 3.

FIG. 3 illustrates a process for navigation based on multiple satellite navigation systems, in accordance with one embodiment of the present teaching. FIG. 3 is illustrated in combination with FIG. 1 and FIG. 2. In one embodiment, the process illustrated FIG. 3 may be included in S30 illustrated in FIG. 2.

At S171, receiver 100 can distribute resources for the positioning satellites of the detected satellite navigation systems. For example, receiver 100 may distribute resources for the positioning satellites based on visibility, performance and an environment of the positioning satellites. The distributed resources may include capturing channel and tracking channel which are hardware resources, and CPU system resources which are software resources, etc.

The visibility of a satellite can be determined based on the positioning satellite ephemeris received by receiver 100. In other words, receiver 100 may detect if a positioning satellite is within the sight of receiver 100 or not. If the positioning satellite is within the sight of receiver 100, receiver 100 can distribute resources for the positioning satellite; otherwise, receiver 100 may not distribute resources or may reduce distributed resources for the positioning satellite. In addition, the coded formats of the satellite signals may be different. The scanning time for the satellite signals with different formats may not be the same. If the scanning time is too long, the positioning efficiency may be deceased. Therefore, the scanning time may also be considered by receiver 100 when the resources are distributed.

At S172, receiver 100 may capture and track the positioning satellites with distributed resources to obtain satellite information, such as pseudo-range, position coordinate, velocity information and frequency information of each positioning satellite, etc, from the positioning satellites. The measured pseudo-range of the positioning satellite may have an error. To reduce the effect of measurement errors caused by other satellites on the positioning result, the number of the positioning satellites can be increased when the error is unacceptable. Thus, the positioning accuracy can be improved. For example, in an embodiment, the number of positioning satellites may be 12 and in another embodiment, the number of positioning satellites may be 8.

At S174, receiver 100 may calculate the position information, the velocity information of receiver 100, and each displacement of receiver 100 corresponding to each clock bias between receiver 100 and each satellite navigation system according to the satellite information received at S172. Receiver 100 may calculate the position information and the displacement according to the equations as the following when the received satellite information is from k satellite navigation systems, where k is an integer greater than 1:

$$p_{11} = \sqrt{(x_{11} - x_u)^2 + (y_{11} + y_u)^2 + (z_{11} - z_u)^2} + b_{u1}; \qquad (2\text{-}11)$$

$$p_{12} = \sqrt{(x_{12} - x_u)^2 + (y_{12} - y_u)^2 + (z_{12} - z_u)^2} + b_{u1}; \qquad (2\text{-}12)$$

......

$$p_{1m} = \sqrt{(x_{1m} - x_u)^2 + (y_{1m} - y_u)^2 + (z_{1m} - z_u)^2} + b_{u1}; \qquad (2\text{-}1m)$$

$$p_{21} = \sqrt{(x_{21} - x_u)^2 + (y_{21} - y_u)^2 + (z_{21} - z_u)^2} + b_{u2}; \qquad (2\text{-}21)$$

$$p_{21} = \sqrt{(x_{21} - x_u)^2 + (y_{21} - y_u)^2 + (z_{21} - z_u)^2} + b_{u2}; \qquad (2\text{-}21)$$

$$p_{22} = \sqrt{(x_{22} - x_u)^2 + (y_{22} - y_u)^2 + (z_{22} - z_u)^2} + b_{u2} ; \qquad (2\text{-}22)$$

......

$$p_{2n} = \sqrt{(x_{2n} - x_u)^2 + (y_{2n} - y_u)^2 + (z_{2n} - z_u)^2} + b_{u2} ; \qquad (2\text{-}2n)$$

$$p_{k1} = \sqrt{(x_{k1} - x_u)^2 + (y_{k1} - y_u)^2 + (z_{k1} - z_u)^2} + b_{uk} ; \qquad (2\text{-}k1)$$

$$p_{k2} = \sqrt{(x_{k2} - x_u)^2 + (y_{k2} - y_u)^2 + (z_{k2} - z_u)^2} + b_{uk} ; \qquad (2\text{-}k2)$$

......

$$p_{kp} = \sqrt{(x_{kp} - x_u)^2 + (y_{kp} - y_u)^2 + (z_{kp} - z_u)^2} + b_{uk} . \qquad (2\text{-}kp)$$

Within the above equations, $\rho_{11} \sim \rho_{1m}$ represent the pseudo-ranges of the m positioning satellites from a first satellite navigation system, respectively; $\rho_{21} \sim \rho_{2n}$ represent the pseudo-ranges of the n positioning satellites from a second satellite navigation system, respectively; $\rho_{k1} \sim \rho_{kp}$ represent the pseudo-ranges of the p positioning satellites from a kth satellite navigation system, respectively. The pseudo-ranges of the positioning satellites can be measured by the tracking loop of receiver 100. Within the above equations, $(x_{1i}, y_{1i}, z_{1i})$ represents a position coordinate of a positioning satellite i from the first satellite navigation system, wherein $1 \leq i \leq m$; $(x_{2j}, y_{2j}, z_{2j})$ represents a position coordinate of a positioning satellite j from the second satellite navigation system, wherein $1 \leq j \leq n$; $(x_{ko}, y_{ko}, z_{ko})$ represents a position coordinate of a positioning satellite o from the kth satellite navigation system, wherein $1 \leq o \leq p$ and $1 \leq m+n+p \leq 12$. The position coordinate of each positioning satellite can be calculated according to the orbit parameters and positioning time of the corresponding positioning satellite. Within the above equations, $b_{u1}$ represents a displacement of receiver 100 corresponding to a clock bias between receiver 100 and the first satellite navigation system; similarly, $b_{u2}$ represents a displacement of receiver 100 corresponding to a clock bias between receiver 100 and the second satellite navigation system; $b_{uk}$ represents a displacement of receiver 100 corresponding to a clock bias between receiver 100 and the kth satellite navigation system; and $(x_u, y_u, z_u)$ represents a position coordinate of receiver 100.

The coordinate $(x_i, y_i, z_i)$ may be an Earth-centered Earth-fixed (ECEF) coordinate. In the Earth-centered Earth-fixed (ECEF) coordinate system, the Earth's center represents the origin point of the coordinate. Z axis points to Northward along the Earth's rotation axis direction; X axis points to the latitude and longitude position (0, 0); and Y axis points to 90 degree longitude, wherein the X axis, Y axis and Z axis consist of a right-handed coordinate system.

For example, in an embodiment the received satellite information is from two satellite navigation systems, e.g., the Beidou satellite navigation system and the GPS system. For such embodiment, for the above-mentioned equations, k is equal to 2, the equations (2-11)-(2-2n) can be used to calculate the position information of receiver 100. In such a situation, there are five unknowns, i.e., $x_u$, $y_u$, $z_u$, $b_{u1}$ and $b_{u2}$, so that at least five positioning satellites may be needed to perform the positioning calculation.

Comparing a first situation in which satellite information is received from two satellite navigation systems with a second situation in which the satellite information is received from one satellite navigation system, the first situation may include calculating an additional displacement of receiver 100 corresponding to a clock bias between receiver 100 and the additional satellite navigation system to correct the calculated navigation information. Thus, the positioning accuracy may be improved in the first situation, compared to the second situation. Similarly, if the received satellite information is from three or more satellite navigation systems, each displacement of receiver 100 corresponding to each clock bias between receiver 100 and each satellite navigation system may be utilized to calculate the position information of receiver 100. In addition, the Beidou satellite navigation system, the GPS system, the GLONASS satellite navigation system and the Galileo satellite navigation system can be all available for receiver 100, i.e., the received satellite information can be from one of the above-mentioned satellite navigation system or a combination thereof.

For simplicity, the above-mentioned equations (2-11)-(2-kp) can be established as equation (3) as following:

$$p_{ij} = \sqrt{(x_{ij} - x_u)^2 + (y_{ij} - y_u)^2 + (z_{ij} - z_u)^2} + b_{ui}; \qquad (3)$$

wherein, $\rho_{ij}$ represents a pseudo-range of the jth positioning satellite in the ith satellite navigation system; $b_{ui}$ represents a displacement of receiver 100 corresponding to a clock bias between receiver 100 and the ith satellite navigation system, i.e., the displacement corresponding to the clock bias between the local clock of receiver 100 and the clock of the ith satellite navigation system; $(x_{ij}, y_{ij}, z_{ij})$ represents a position coordinate of the jth positioning satellite in the ith satellite navigation system; and $(x_u, y_u, z_u)$ represents a position coordinate of receiver 100.

In some instances, the number of available positioning satellites for a satellite navigation system may be relatively low. In such instances, the positioning accuracy can be low. Therefore, if the receiver can receive satellite signals from multiple satellite navigation systems, the number of the available positioning satellites can be increased, thereby improving the positioning accuracy and velocity measurement accuracy.

The velocity information of receiver 100 can be calculated according to equation (4) as the following:

$$\frac{c(f_{ij} - f_{Tij})}{f_{Tij}} + v_{ij\_x}a_{ij\_x} + v_{ij\_y}a_{ij\_y} + v_{ij\_z}a_{ij\_z} = \dot{x}_u a_{ij\_x} + \dot{y}_u a_{ij\_y} + \dot{z}_u a_{ij\_z} - \frac{cf_{ij}\dot{t}_u}{f_{Tij}};$$

$$(4)$$

wherein, $f_{ij}$ represents a receiving frequency of a satellite signal received by receiver 100 from the jth positioning satellite in the ith satellite navigation system; $h_{Tij}$ represents a transmitting frequency of a satellite signal transmitted by the jth positioning satellite in the ith satellite navigation system. The transmitting frequencies of the satellite signals from the same satellite navigation system may be the same. For example, if the ith satellite navigation system includes three satellites, then, $f_{Ti1} = f_{Ti2} = f_{Ti3}$. For example, the transmitting frequency of the satellite signals B1 from the Beidou satellite can be 1.561098e9Hz, the transmitting frequency of the satellite signals L1 from the GPS satellite can be 1.57542e9Hz. In this embodiment, the receiving frequency and the transmitting frequency may be included in the frequency information. In equation (4), c represents the velocity of light, wherein c=2.99792458e8m/s; $(v_{ij\_x}, v_{ij\_y}, v_{ij\_z})$ represents a velocity vector of the jth positioning satellite in the ith satellite navigation system and can be calculated according to the positioning satellite ephemeris and a present time; $(a_{ij\_x}, a_{ij\_j}, a_{ij\_z})$ represents a direction vector of the jth positioning satellite in the ith satellite navigation system relative to receiver 100, and $a_{ij\_x}=(x_{ij}-x_u)/r$, $a_{ij\_y}=(y_{ij}-y_u)/r$, $a_{ij\_z}=(z_{ij}-z_u)/r$, wherein r represents a distance from receiver 100 to the jth positioning satellite in the ith satellite navigation system; $(x_{ij}, y_{ij}, z_{ij})$ represents a position coordinate of the jth positioning satellite in the ith satellite navigation system; $(x_u, y_u, z_u)$ represents a position coordinate of receiver 100; $(\dot{x}_u, \dot{y}_u, \dot{z}_u)$ represents a velocity vector of receiver 100; and $\dot{t}_u$ represents a timing variation rate of the clock in receiver 100, i.e., the rate of clock variation in receiver 100. It can be assumed that the clock in the satellite navigation system is stable, so that the timing variation rate can be related to the clock of receiver 100. The timing variation rate is the first derivative of the clock bias between receiver 100 and the satellite navigation system.

After the position information and the velocity information of receiver 100 are calculated according to the above-mentioned equations, receiver 100 can generate a navigation path for navigation.

In one example, when there are relatively few errors in the measurements of the satellite pseudo-ranges and Doppler measurements, the accuracy of the positioning calculation can be increased by increasing the number of the positioning satellites. If the tracking quality of the satellites is poor, for example, there may be many measurement errors in the satellite pseudo-ranges and Doppler measurements in the satellite information provided by the satellites. In that situation, the positioning accuracy can be decreased when the number of the positioning satellites is increased. Therefore, it may be necessary to identify the positioning satellites which provide the satellite information (e.g., pseudo range and Doppler measurement) with many errors.

In such instances, another process S173 (not shown in FIG. 3) can be performed after performing S172 and before performing S174. The identification unit in calculation module 20 of receiver 100 may identify the redundant positioning satellites in each satellite navigation system according to the received satellite information. The satellite signals from the identified redundant satellites may be abandoned and may not be used to calculate the position of receiver 100. For example, the identification unit can identify the positioning satellites that provide the satellite information (e.g., pseudo range and Doppler measurement) with many errors as the redundant satellites. In one embodiment, the redundant satellites can be identified using RAIM method. The identification unit can also identify the redundant satellites according to output parameters of each receiver loop, e.g., the variation of the carrier frequency, the variation of the pseudo range measurement, etc.

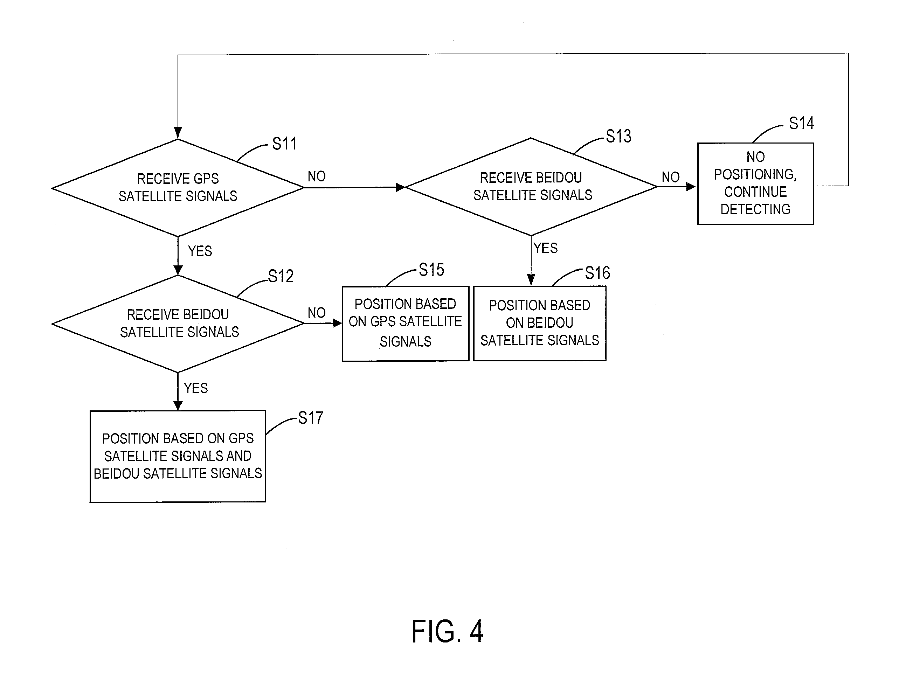

FIG. 4 illustrates an exemplary method for navigation, in accordance with one embodiment of the present teaching. Using the example of BeiDou (Compass) satellite navigation system and Global Positioning System (GPS), FIG. 4 is illustrated in combination with FIG. 1.

Detection module 10 in receiver 100 may receive the GPS satellite signals, at S11. If receiver 100 receives the GPS satellite signals, detection module 10 may further detect if receiver 100 receives the Beidou satellite signals, at S12. Otherwise, if receiver 100 does not receive the GPS satellite signals, detection module 10 in receiver 100 may still detect if the Beidou satellite signals are received, at S13. If no satellite signals are received from either GPS system or BeiDou system, at S14, no position detection can be performed and detection module 10 may continue detecting satellite signals, i.e., moving back to S11 again.

As the Beidou satellite signals and the GPS satellite signals are based on CDMA technology, receiver 100 can distinguish the GPS satellite signals and the Beidou satellites from the received satellite signals by using I-branch ordinary ranging code at S11, S12, and S13, respectively.

If receiver 100 detects the GPS satellite signals, but not the Beidou satellite signals, receiver 100 can perform positioning in a single mode based on the GPS satellite signals, at S15. If receiver 100 does not receive the GPS satellite signals, but receives the Beidou satellite signals, receiver 100 may perform positioning in a single mode based on the Beidou satellite signals, at S16.

At S16 for example, when receiver 100 receives the Beidou satellite signals, the position information of receiver 100 and the displacement of receiver 100 corresponding to a clock bias between receiver 100 and the Beidou satellite navigation system can be calculated according to the equations (5-1)-(5-n) as the following:

$$p_1 = \sqrt{(x_1 - x_u)^2 + (y_1 - y_u)^2 + (z_1 - z_u)^2} + b_u; \qquad (5\text{-}1)$$

$$p_2 = \sqrt{(x_2 - x_u)^2 + (y_2 - y_u)^2 + (z_2 - z_u)^2} + b_u; \qquad (5\text{-}2)$$

......

$$p_n = \sqrt{(x_n - x_u)^2 + (y_n - y_u)^2 + (z_n + z_u)^2} + b_u; \qquad (5\text{-}n)$$

wherein, $\rho_1 \sim \rho_n$ represent pseudo-ranges of n Beidou positioning satellites, respectively, and $\rho_1 \sim \rho_n$ can be calculated by the tracking loop of receiver 100; $(x_i, y_i, z_i)$ represents the position coordinate of the ith Beidou positioning satellite, wherein $1 \leq i \leq n$. The $(x_i, y_i, z_i)$ can be calculated according to the orbit parameters and the positioning time of the ith Beidou positioning satellite. The orbit parameters can be obtained by demodulating navigation message data D on the I-branch and analyzing and collecting the ICD document of the satellite navigation system after the satellite signals are tracked and locked. In the equations (5-1)-(5-n), $b_u$ represents a displacement of receiver 100 corresponding to the clock bias between receiver 100 and the Beidou satellite navigation system; $(x_u, y_u, z_u)$ represents a position coordinate of receiver 100. There are four unknowns in equations (5-1)-(5-n), i.e., $x_u$, $y_u$, $z_u$ and $b_u$. The four unknowns can be calculated according to the satellite information from at least four Beidou positioning satellites.

If receiver 100 receives not only the GPS satellite signals but also the Beidou satellite signals, receiver 100 can perform positioning in a dual mode, at S17, i.e., receiver 100 can perform positioning according to the GPS satellite signals and the Beidou satellite signals simultaneously at S17. Receiver 100 can calculate the position information according to the equations (2-11)-(2-2n). In such a situation, there are five unknowns, i.e., $x_u$, $y_u$, $z_u$, $b_{u1}$ and $b_{u2}$, so that

at least five positioning satellites may be needed to perform the positioning calculation.

It is to be understood that such description is for illustrative purpose only and does not intend to limit the scope of the present teaching. It can be understood that, detection module 10 can further detect if the received satellite signals from Galileo system, GLONASS system, or any other alternate or additional satellite navigation system. It can also be understood that the order for detecting the satellite signals from different satellite navigation systems can be randomly selected and may not be limited to the disclosed order in the above example.

Aspects of the method for navigation, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another. Thus, another type of media that may bear the software elements includes optical, electrical, and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory, such as a main memory of such a computer platform. Tangible transmission media include coaxial cables; copper wire and fiber optics, including the wires that form a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing description and drawings represent embodiments of the present teaching, it will be understood that various additions, modifications, and substitutions may be made therein without departing from the spirit and scope of the principles of the present teaching as defined in the accompanying claims. One skilled in the art will appreciate that the present teaching may be used with many modifications of form, structure, arrangement, proportions, materials, elements, and components and otherwise, used in the practice of the disclosure, which are particularly adapted to specific environments and operative requirements without departing from the principles of the present teaching. The presently disclosed embodiments are therefore to be considered in all respects as illustrative and not restrictive, the scope of the present teaching being indicated by the appended claims and their legal equivalents, and not limited to the foregoing description.

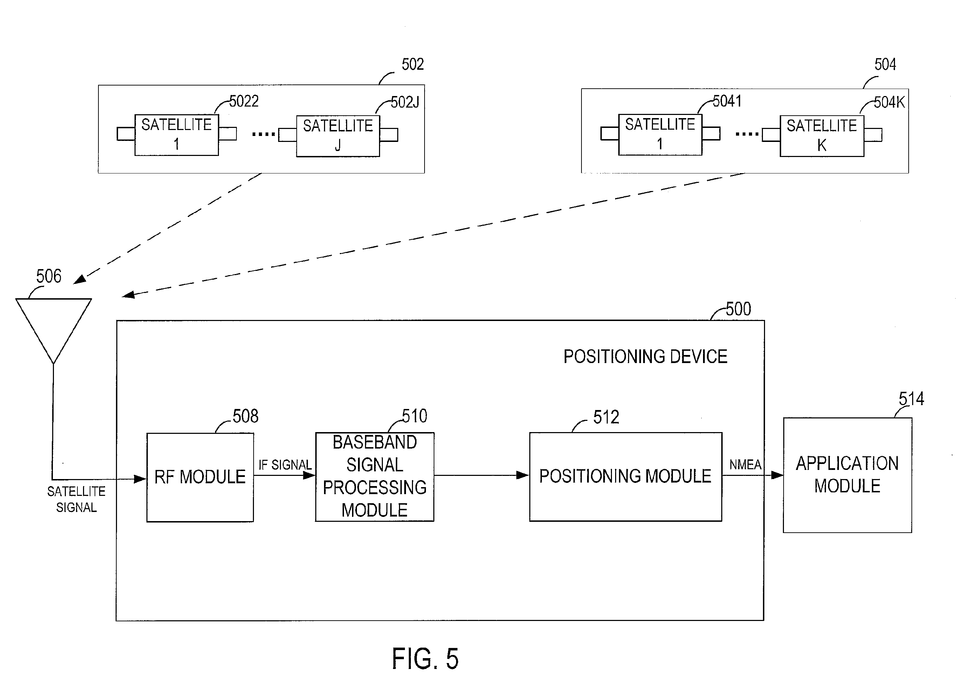

FIG. 5 illustrates an exemplary block diagram of a positioning device, in accordance with one embodiment of the present teaching. As shown in FIG. 5, positioning device may be implemented with multiple satellite navigation systems.

As shown in FIG. 5, positioning device 500 (e.g., a receiver) may include antenna 506, RF (Radio Frequency) module 508, baseband signal processing module 510, positioning module 512, and application module 514. In the example of FIG. 5, positioning device 500 receives satellite signals from a first satellite navigation system 502 and a second satellite navigation system 504. In one embodiment, first satellite navigation system 502 may include satellites 5021~502J (J is an integer greater than 1). Second satellite navigation system 504 may include satellites 5041~504K (K is an integer greater than 1). It should be noted that the example illustrated in FIG. 5 is exemplary and is not intended to limit the scope of the present teaching, and other number of the satellite navigation systems can be applied in the present invention.

In one embodiment, positioning device 500 receives the satellites signals from multiple satellite navigation systems via antenna 506. More specifically, as shown in FIG. 5, positioning device 500 receives satellite signals from satellites 5021~502J in first satellite navigation system 502 and satellites signals from satellites 5041~504K in second satellite navigation system 504. In the example illustrated in FIG. 5, as positioning device 500 may receive satellite signals from multiple satellite navigation systems, antenna 506 may be configured as a multi-mode antenna for receiving satellite signals with different frequencies.

RF module 508 receives the satellite signals from antenna 506, and mixes the frequencies of the received satellite signals with a frequency of a signal generated by positioning device 500 to generate intermediate frequency (IF) signals. After being amplified and converted by an A/D device (not shown in FIG. 5), the converted IF signals are transmitted to baseband signal processing module 510.

Baseband signal processing module 510 may capture, track and decode the received IF signals to obtain the frequency information and pseudo-ranges of the satellites and classify the satellites. By capturing and tracking the satellite signals, baseband signal processing module 510 classifies the satellites as well as obtains the frequency information and pseudo-ranges of the satellites. That is, baseband signal processing module 510 identifies a satellite in a satellite navigation system from which a received satellite signal is transmitted. The frequency information of the satellites is the frequencies of the satellites received by positioning device 500. In one embodiment, positioning device 500 can identify the received satellite signals according to frequency if the satellite signals are based on FDMA technology. And positioning device 500 can identify the satellite signals that are based on CDMA technology by using I-branch ordinary ranging code.

More specifically, the satellite signals that are based on CDMA technology, e.g., the Beidou satellite signals and the GPS satellite signals, can be expressed by an equation as the following:

$$S^j = AC^j D^j \cos(2\pi f\, t + \theta^j) \qquad (6)$$

wherein, $S^j$ represents a satellite signal transmitted from a satellite with an ID of j, A represents an amplitude of an ordinary ranging code modulated in I-branch, C represents the I-branch ordinary ranging code, D represents navigation message data in the I-branch, f represents the carrier frequency of the satellite signal, t represents a transmitting time of the satellite signal, j represents an identification (ID) of a satellite, $\theta$ represents an initial carrier phase of each satellite signal, the value of $\theta$ can be different for each satellite. The above-mentioned parameters can be all known to the corresponding satellite. The parameters can be obtained at positioning device 500 by capturing and tracking the satellite signals.

Each CDMA satellite signal has a unique rule for generating pseudo-random number (PRN). Therefore, a type of a satellite signal can be identified based on the pseudo-random number sequence, i.e., the parameter C in equation (6). For positioning device 500, the available satellite signals can be captured and identified by reestablishing the pseudo-random number sequence of the satellites.

For example, the method for establishing the PRN sequence can be obtained from an Interface Control Document (ICD) of each satellite navigation system. Therefore, positioning device 500 may search for possible receiving frequency of the satellite and the PRN information. After receiving a satellite signal from a satellite, positioning device 500 can obtain the navigation message data D in the I-branch and the initial carrier phase $\theta$ of the satellite signal. A baseband channel may establish a PRN sequence in accordance with the PRN sequence of the satellite. Positioning device 500 may capture and track the satellite. If the satellite is captured and tracked successfully, the present satellite signal can be included in the input signals. In addition, only when the established PRN sequence corresponds with the PRN sequence of the captured and tracked satellite signals, a high correlation peak occurs between the CDMA signals. For example, when the established PRN sequence is the same as the PRN sequence of the captured and tracked satellite signals, a correlation peak occurs between the CDMA signals. Thus, positioning device 500 can detect if the satellite is captured successfully or not by detecting the correlation peak of the CDMA signals based on a capturing threshold.

Baseband signal processing module 510 can obtain the frequency information and pseudo-ranges of multiple satellites after capturing, tracking, and decoding the satellite signals. Positioning module 512 receives the frequency information, pseudo-ranges, and the classification result of the satellites from the baseband signal processing module 510 to select suitable positioning satellites from the satellites 5021~502J and 5041~504K. Positioning module 512 may calculate the navigation information based on Karlman filter algorithm in accordance with the frequency information and pseudo-ranges of the selected satellites. Then the navigation information of positioning device 500 is converted into NMEA (The National Marine Electronics Association) format, and output to application module 514 for processing. The detailed description of positioning module 512 will be illustrated as following.

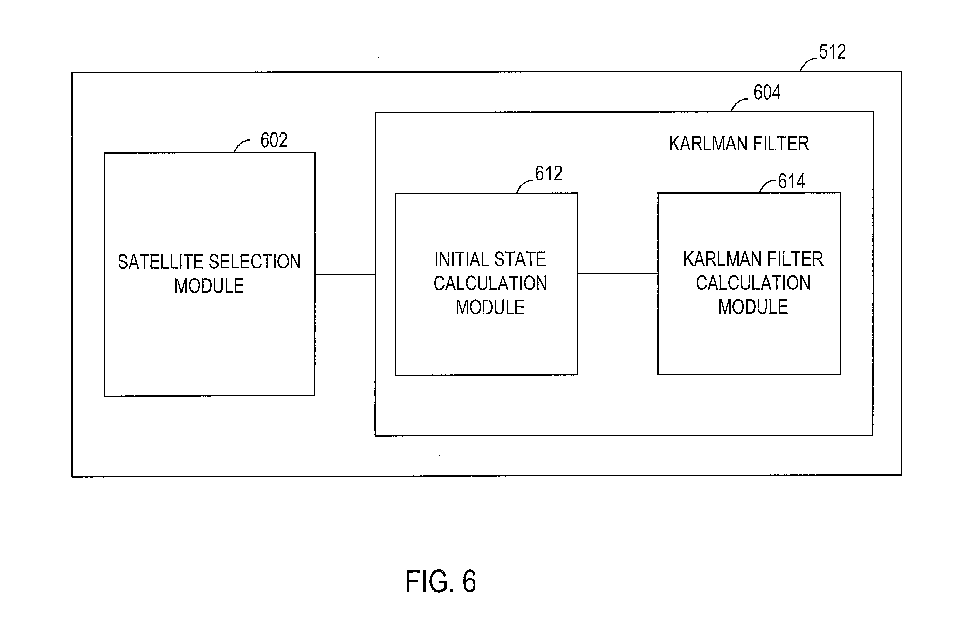

FIG. 6 shows an exemplary block diagram of positioning module 512 in positioning device 500, in accordance with one embodiment of the present teaching. As shown in FIG. 6, positioning module 512 may include satellite selection module 602 and Karlman filter 604. Satellite selection module 602 selects positioning satellites from multiple satellites (e.g, satellites 5021~502J and satellites 5041~504K), and outputs the frequency information and pseudo-ranges of the selected satellites. Karlman filter 604 is coupled to satellite selection module 602 to receive the frequency information and pseudo-ranges of the selected satellites from satellite selection module 602, and calculates the navigation information of positioning device 500 based on Karlman filter algorithm.

In one embodiment, satellite selection module 602 selects the positioning satellites according to factors, such as the satellite signal strength, the satellite elevation angle, and the tracking quality, etc. In operation, satellite selection module 602 determines if the satellites of a satellite navigation system (e.g., satellite navigation system 502) are enough for calculating the navigation information. More specifically, satellite selection module 602 determines if the satellites in a satellite navigation system are enough for calculating the desired navigation information of positioning device 500 according to factors, such as the signal strength of the satellites in the satellite navigation system, the number of available satellites in the satellite navigation system, and the dilution of precision (DOP) of the satellite navigation system, etc. If satellite selection module 602 determines that the satellites from one satellite navigation system are enough for calculating the navigation information of positioning device 500, satellite selection module 602 may not select the satellites from other satellite navigation systems; otherwise, satellite selection module 602 may further select the satellites from other satellite navigation systems (e.g., second navigation satellite system 504).

In an embodiment, for example, satellite selection module 602 may receive satellite signals from five satellites, four of the satellites are from GPS satellite navigation system, and one of the satellites is from BD satellite navigation system. In this case, if satellite selection module 602 detects that the signals transmitted by the four GPS satellites have desired factors (e.g., desired signal strength, desired number of the satellite, etc.) to calculate the navigation information, and considering that an additional satellite signal from another satellite navigation system may add an unknown number due to a different clock bias caused by a different satellite navigation system, the satellite selection module 602 may select the four GPS satellites from the GPS satellite navigation system as the positioning satellites to calculate the navigation information of positioning device 500.

In another example, satellite selection module 602 may receive satellite signals from five satellites, three of the satellites are from GPS satellite navigation system, and two of the satellites are from BD satellite navigation system. In this case, the number of available satellites from either GPS satellite navigation system or the BD satellite navigation system is not enough for calculating the navigation information. Therefore, satellite selection module 602 may select the three satellites from GPS satellite navigation system and the two satellites from BD satellite navigation system as the positioning satellites for calculating the navigation information.

In yet another example, satellite selection module 602 may receive satellite signals from six satellites, four of the satellites are from GPS satellite navigation system, and two of the satellites are from BD satellite navigation system. And the satellite signals from the four GPS satellites have weak strength. In this case, although the number of available satellites from GPS satellite navigation system is enough for calculating the navigation information, the signal strength of the GPS satellite signals are weak, which may cause the navigation less accurate. Therefore, satellite selection module 602 may further the two satellites from BD satellite navigation system as the positioning satellites. Thus, positioning device 500 calculates the navigation information in a dual mode by using the satellites from GPS satellite navigation system and the satellites from BD satellite navigation system. In this case, the accurate of the calculation is improved.

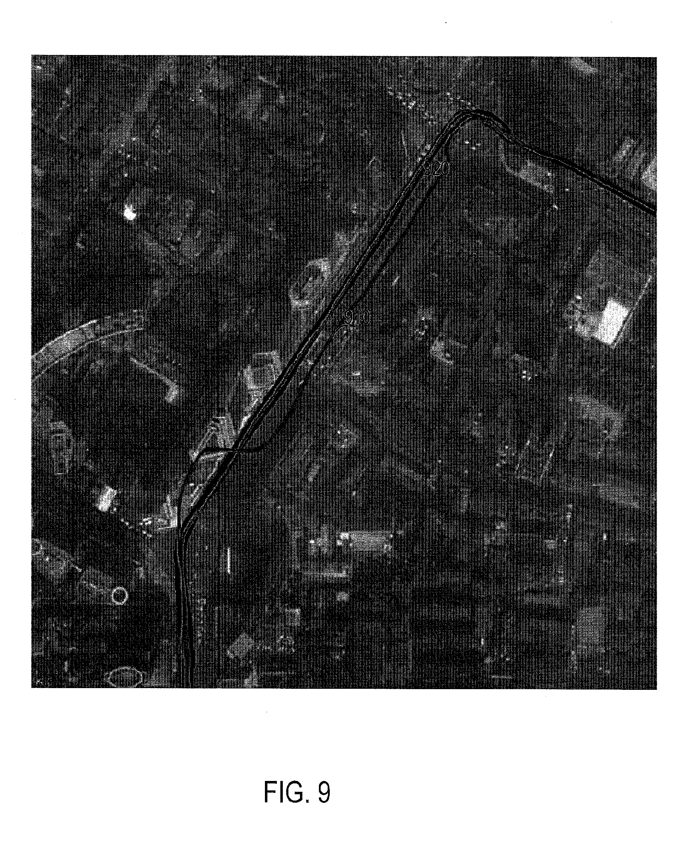

FIG. 9 depicts a graph illustrating a comparison of tracks calculated based on Karlman filter algorithm in a single GPS satellite navigation system and in a dual-mode satellite navigation system, respectively. As illustrated in FIG. 9, the track labeled as 910 indicates a track calculated based on Karlman filter algorithm in a single GPS satellite navigation system with relatively weak satellite signals, and the track labeled as 920 indicates a track calculated based on Karlman filter algorithm in a dual-mode satellite navigation system. As shown in FIG. 9, for the single GPS satellite navigation system with relatively weak satellite signals, much more accurate navigation information can be obtained by selecting satellite signals from other satellite navigation system and calculating based on Karlman filter algorithm.

Referring now to FIG. 6, after selecting the positioning satellites, satellite selection module 602 outputs the frequency information and pseudo-ranges of the selected satellites to Karlman filter 604. As shown in FIG. 6, Karlman filter 604 may include initial state calculation module 612 and Karlman filter calculating module 614. A detailed description of Karlman filter 604 will be illustrated with reference to the flowchart of Karlman filter algorithm in the following.

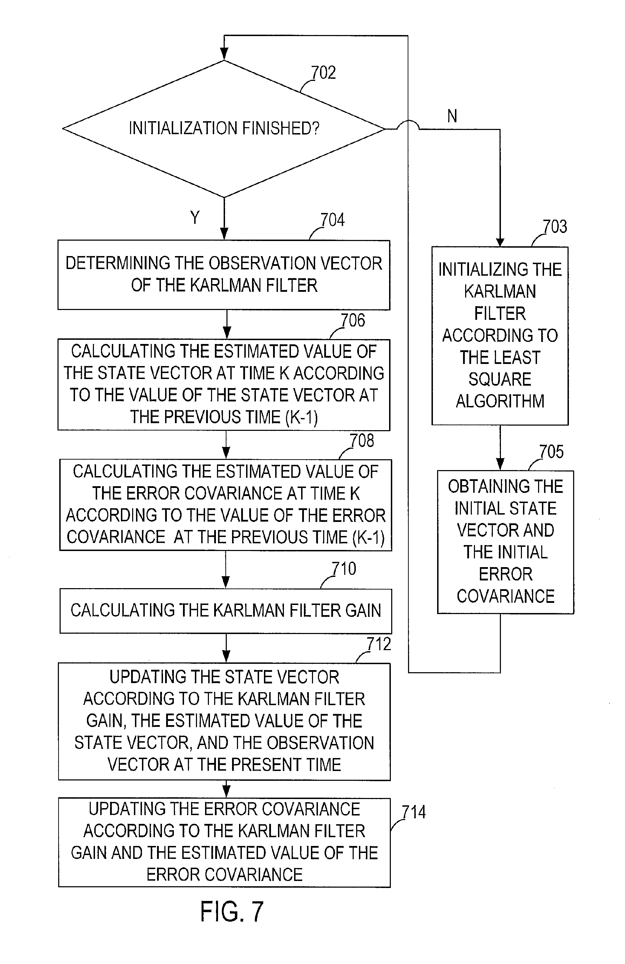

FIG.7 illustrates a method for positioning based on Karlman filter algorithm in a satellite navigation system, in accordance with one embodiment of the present teaching. FIG. 7 is illustrated in combination with FIG. 6.

For a positioning device, there are three types of Karlman model: P type model, PV type model, and PVA model. In the P type model, the position state is considered as random walk, which is used in a static scene. In the PV type model, the velocity state is considered as random walk, which is used in a low dynamic scene. In the PVA type model, three acceleration components are needed. These acceleration components are considered as random walk and can be used in a scene where the acceleration of positioning device varies in a large range such as, for example, a high-speed airplane. The following description will take the PV type models of the multiple satellite navigation systems as an example to establish the equation of state. However, it should be understood that, the equation of state can also be established in either the P type models or the PVA type models.

In the Karlman filter algorithm, the equation of state can be defined as following:

$$X_{k+1} = \mathbf{\Phi}_k X_k + \mathbf{w}_k \tag{7-1}$$

Wherein, X is the state vector, $\Phi$ is the state matrix, and w is the state noise.

The observation equation can be defined as following:

$$Z_k = \mathbf{H}_k \mathbf{X}_k + \mathbf{v}_k \tag{7-2}$$

Wherein, Z is the observation matrix, H is the measurement matrix, and $V_k$ is the measurement noise.

For a multi-mode navigation system, the state vector X can be defined as X=[$p_x$, $p_y$, $p_z$, $v_x$, $v_y$, $v_z$, $b_{u1}$, $b_{u2}$... $b_{uM}$, $c\dot{t}_u$]. M indicates the number of the satellite navigation systems for calculation and is an integer greater than 1. ($p_x$, $p_y$, $p_z$) is the position of positioning device 500 in the ECEF coordinate. ($v_x$, $v_y$, $v_z$) is the velocity of positioning device 500 in the ECEF coordinate. ($b_{u1}$, $b_{u2}$... $b_{uM}$) are displacements of positioning device 500 corresponding to the clock biases between positioning device 500 and the satellite navigation systems for each of the M satellite navigation systems. $\dot{t}_u$ represents a timing variation rate of the clock in positioning device 500, i.e., the rate of clock variation in positioning device 500, and c is the velocity of light. Therefore, for M satellite navigation systems, the state vector has (7+M) dimensions. For example, if there are 2 satellite navigation system for calculation, the state vector has 9 dimensions, that is, the state vector X is X=[$p_x$, $p_y$, $p_z$, $v_x$, $v_y$, $v_z$, $b_{u1}$, $b_{u2}$, $c\dot{t}_u$].

Therefore, for a multi-mode navigation system with M satellite navigation systems, the state equation can be defined as:

$$\begin{cases} p_k = p_{k-1} + v_{k-1} * T + w_{pk} \\ v_k = v_{k-1} + w_{vk} \\ t_{u_k} = t_{u_{k-1}} + \dot{t}_{u_{k-1}} * T + w_{tk} \end{cases} \tag{7-3}$$

Wherein, p represents the coordinate ($p_x$, $p_y$, $p_z$) of positioning device 500 in the ECEF coordinate, v represents the velocity ($v_x$, $v_y$, $v_z$) of positioning device 500 in the ECEF coordinate, $t_u$ represents a clock bias between positioning device 500
and each satellite navigation system, $\dot{t}_u$ represents a timing variation rate of the clock in positioning device 500.

Thus, for a multi-mode navigation system with M satellite navigation systems, the state matrix $\Phi$ is a (7+M)*(7+M) matrix:

$$\Phi = \begin{bmatrix} 1 & 0 & 0 & T & 0 & 0 & 0 & \cdots & 0 \\ 0 & 1 & 0 & 0 & T & 0 & 0 & \cdots & 0 \\ 0 & 0 & 1 & 0 & 0 & T & 0 & \cdots & 0 \\ 0 & 0 & 0 & 1 & 0 & 0 & 0 & \cdots & 0 \\ 0 & 0 & 0 & 0 & 1 & 0 & 0 & \cdots & 0 \\ 0 & 0 & 0 & 0 & 0 & 1 & 0 & \cdots & 0 \\ 0 & 0 & 0 & 0 & 0 & 0 & 1 & \cdots & T \\ \vdots & \vdots & \vdots & \vdots & \vdots & \vdots & \vdots & \ddots & \vdots \\ 0 & 0 & 0 & 0 & 0 & 0 & 0 & \cdots & 1 \end{bmatrix}$$

For example, the a dual-mode navigation system, the state matrix $\Phi$ is a 9*9 matrix:

$$\Phi = \begin{bmatrix} 1 & 0 & 0 & T & 0 & 0 & 0 & 0 & 0 \\ 0 & 1 & 0 & 0 & T & 0 & 0 & 0 & 0 \\ 0 & 0 & 1 & 0 & 0 & T & 0 & 0 & 0 \\ 0 & 0 & 0 & 1 & 0 & 0 & 0 & 0 & 0 \\ 0 & 0 & 0 & 0 & 1 & 0 & 0 & 0 & 0 \\ 0 & 0 & 0 & 0 & 0 & 1 & 0 & 0 & 0 \\ 0 & 0 & 0 & 0 & 0 & 0 & 1 & T & 0 \\ 0 & 0 & 0 & 0 & 0 & 0 & 0 & 1 & T \\ 0 & 0 & 0 & 0 & 0 & 0 & 0 & 0 & 1 \end{bmatrix}$$

Wherein, T is the positioning period of positioning device.

As mentioned above, in the multi-mode satellite navigation system with M satellite navigation systems for positioning, the position observation equations can be defined as equations (7-11)~(7-Mp):

$$\rho_{11} = \sqrt{(x_{11} - x_u)^2 + (y_{11} - y_u)^2 + (z_{11} - z_u)^2} + b_{u1} \qquad (7\text{-}11)$$

$$\rho_{12} = \sqrt{(x_{12} - x_u)^2 + (y_{12} - y_u)^2 + (z_{12} - z_u)^2} + b_{u1} \qquad (7\text{-}12)$$

...

$$\rho_{1m} = \sqrt{(x_{1m} - x_u)^2 + (y_{1m} - y_u)^2 + (z_{1m} - z_u)^2} + b_{u1} \qquad (7\text{-}1m)$$

...

$$\rho_{M1} = \sqrt{(x_{M1} - x_u)^2 + (y_{M1} - y_u)^2 + (z_{M1} - z_u)^2} + b_{uM} \qquad (7\text{-}M1)$$

$$\rho_{M2} = \sqrt{(x_{M2} - x_u)^2 + (y_{M2} - y_u)^2 + (z_{M2} - z_u)^2} + b_{uM} \qquad (7\text{-}M2)$$

...

$$\rho_{Mp} = \sqrt{(x_{Mp} - x_u)^2 + (y_{Mp} - y_u)^2 + (z_{Mp} - z_u)^2} + b_{uM} \qquad (7\text{-}Mp)$$

$\rho_{11}\sim\rho_{1m}$ represent the pseudo-ranges of the m positioning satellites from a first satellite navigation system, respectively; $\rho_{M1}\sim\rho_{Mp}$ represent the pseudo-ranges of the p positioning satellites from the Mth satellite navigation system, respectively. The pseudo-ranges as mentioned above can be measured by tracking, and M is an integer and greater

than 1. $(x_{1i}, y_{1i}, z_{1i})$ represents a position coordinate of a positioning satellite i from the first satellite navigation system, wherein $1 \leq i \leq m$; $(x_{Mo}, y_{Mo}, z_{Mo})$ represents a position coordinate of a positioning satellite o from the $M^{th}$ satellite navigation system, wherein $1 \leq o \leq p$ and $m+...+p=N$ (N is the number of the positioning satellites). Within the above equations, $b_{u1}$ represents a displacement of positioning device 500 corresponding to a clock bias between positioning device 500 and the first satellite navigation system, i.e., the displacement corresponding to the clock bias between the local clock of positioning device 500 and the clock of the first satellite navigation system; similarly, $b_{uM}$ represents a displacement of positioning device 500 corresponding to a clock bias between positioning device 500 and the $M^{th}$ satellite navigation system. $(x_u, y_u, z_u)$ represents a position coordinate of positioning device 500.

In one embodiment, for the $M^{th}$ satellite navigation system, if there are N positioning satellites for positioning calculation, then the observation equation for the velocity is as following:

$$d = Hg \qquad\qquad (8\text{-}1)$$

d is the component of the velocity vector of the of positioning device 500 from positioning device 500 to the positioning satellite.

$$d = \begin{bmatrix} d_1 \\ d_2 \\ .... \\ d_N \end{bmatrix}, \quad H = \begin{bmatrix} a_{x1} & a_{y1} & a_{z1} & 1 \\ a_{x2} & a_{y2} & a_{z2} & 1 \\ .... & .... & .... & 1 \\ a_{xN} & a_{yN} & a_{zN} & 1 \end{bmatrix}, \quad g = \begin{bmatrix} \dot{x}_u \\ \dot{y}_u \\ \dot{z}_u \\ -c\,\dot{t}_u \end{bmatrix}$$

According to equations (7-1)~(7-Mp) and (8-1), an observation vector Z can be obtained. The observation vector Z is defined as:

$$Z = \begin{bmatrix} \rho_{11}, \cdots \rho_{1m}, ... \rho_{M1}, ... \rho_{Mp}, d_{11}, \cdots d_{1m}, ... d_{M1}, ... d_{Mp} \end{bmatrix}^{T}$$

The observation vector Z has a length of 2*(m+p), m is the number of positioning satellites in the first satellite navigation system, and p is the number of positioning satellites in the $M^{th}$ satellite navigation system. $\rho$ represent the pseudo-range of a positioning satellite, and d is the component of the velocity vector of positioning device 500 from positioning device 500 to the positioning satellite, d has a unit of m/s.

The measurement matrix based on Karlman filter algorithm for M satellite navigation systems is a (2N)*(7+M) order matrix. N is the number of the positioning satellites, and N=m+...+p, m is the number of positioning satellites in the first satellite navigation system, and p is the number of positioning satellites in the $M^{th}$ satellite navigation system. M is the number of the satellite navigation systems for calculating the position. Take a dual-mode satellite navigation system as an example. It is assumed that the number of the positioning satellite from the first satellite navigation system is m, and the number of the positioning satellite from the second satellite navigation system is p. Thus, the measurement matrix based on Karlman filter algorithm for the dual-mode satellite navigation system is a (2(m+p))*9 order matrix shown as following:

$$H = \begin{bmatrix}
a_{1x1} & a_{1y1} & a_{1z1} & 0 & 0 & 0 & 1 & 0 & 0 \\
\vdots & \vdots & \vdots & \vdots & \vdots & \vdots & \vdots & \vdots & \vdots \\
a_{1xm} & a_{1ym} & a_{1zm} & 0 & 0 & 0 & 1 & 0 & 0 \\
a_{2x1} & a_{2y1} & a_{2z1} & 0 & 0 & 0 & 0 & 1 & 0 \\
\vdots & \vdots & \vdots & \vdots & \vdots & \vdots & \vdots & \vdots & \vdots \\
a_{2xp} & a_{2yp} & a_{2zp} & 0 & 0 & 0 & 0 & 1 & 0 \\
0 & 0 & 0 & a_{1x1} & a_{1y1} & a_{1z1} & 0 & 0 & 1 \\
\vdots & \vdots & \vdots & \vdots & \vdots & \vdots & \vdots & \vdots & \vdots \\
0 & 0 & 0 & a_{1xm} & a_{1ym} & a_{1zm} & 0 & 0 & 1 \\
0 & 0 & 0 & a_{2x1} & a_{2y1} & a_{2z1} & 0 & 0 & 1 \\
\vdots & \vdots & \vdots & \vdots & \vdots & \vdots & \vdots & \vdots & \vdots \\
0 & 0 & 0 & a_{2xp} & a_{2yp} & a_{2zp} & 0 & 0 & 1
\end{bmatrix}$$

Wherein, $a_{Axj} = \dfrac{\hat{X}_u - X_j}{\hat{r}_j}$. A represents the satellite navigation system. For example, in the dual-mode satellite navigation system, A is 1 or 2. $\hat{X}_u$ is the component of the estimated position value of positioning device 500 in the ECEF coordinate system. $X_j$ is the component of the location of the positioning satellite in the A ECEF coordinate system, and $\hat{r}_j$ is the estimated distance from a positioning satellite to positioning device 500.

It is understood that, the location of the elements in the state Vector is changeable, and the corresponding state matrix and measurement matrix may be adjusted accordingly. Similarly, the location of the elements in the state Vector is also changeable, and the corresponding state matrix and measurement matrix may be adjusted accordingly.

Referring back to FIG. 7, at block 702, initial state calculation module 612 in Karlman filter 604 calculates the initial state vector $X_0$ and initial error covariance $P_0$ of Karlman filter. When the initialization is finished, the process goes to block 704; otherwise, the process goes to block 703. At block 703, Karlman filter 604 is initialized according to the Least Square algorithm. And at block 705, the initial state vector $X_0$ and initial error covariance $P_0$ is obtained.

At block 704, Karlman filter calculation module 614 determines the observation vector Z of Karlman filter at the present time. As mentioned above, the observation vector Z includes the pseudo-ranges of the positioning satellites and the components of the velocity vectors of positioning device 500 from positioning device 500 to the positioning satellites. That is,

$$Z = \left[ \rho_{11}, \cdots \rho_{1m}, \ldots \rho_{M1}, \ldots \rho_{Mp}, d_{11}, \cdots d_{1m}, \ldots d_{M1}, \ldots d_{Mp} \right]^T$$

The observation vector Z has a length of 2*N, N is the number of the positioning satellites, and N=m+...+p, m is the number of positioning satellites in the first satellite navigation system, and p is the number of positioning satellites in the $M^{th}$ satellite navigation system. M is the number of the satellite navigation systems.

At block 706, Karlman filter calculation module 614 calculates the estimated value of the state vector at time K according to the value of the state vector at the previous time (k-1). In one embodiment, Karlman filter calculation module 614 calculates the estimated value of the state vector $X^-_k$ at time K according to equation (9-1) as following:

$$X^-_k = \Phi_k X_{k-1}$$

$$(9\text{-}1)$$

At block 708, Karlman filter calculation module 614 calculates the estimated value of the error covariance at time k according to the value of the error covariance at the previous time (k-1). In one embodiment, Karlman filter calculation module 614 calculates the estimated value $P^-_k$ of the error covariance at time K according to equation (9-2) as following:

$$P^-_k = \Phi_k P_{k-1} \Phi_k^T + Q_k \qquad (9\text{-}2)$$

Wherein, $Q_k$ represents the process stimulation noise error covariance.

At block 710, Karlman filter calculation module 614 calculates Karlman filter gain $K_k$ at time K according to the estimated value of the error covariance $P^-_k$ at time k. In one embodiment, Karlman filter calculation module 614 calculates Karlman filter gain $K_k$ at time K according to equation (9-3) as following:

$$K_k = P^-_k H_k^T [H_k P_k^- H_k^T + P_k]^{-1} \qquad (9\text{-}3)$$

At block 712, Karlman filter calculation module 614 updates the state vector $X_k$ according to Karlman filter gain $K_k$, the estimated value of the state vector $X^-_k$ at time K, and the observation vector Z at the present time. In one embodiment, Karlman filter calculation module 614 updates the state vector $X_k$ according to equation (9-4) as following:

$$X_k = X^-_k + K_k [Z_k - H_k X_k^-] \qquad (9\text{-}4)$$

At block 714, Karlman filter calculation module 614 updates the error covariance $P_k$ at time k according to Karlman filter gain $K_k$ and the estimated value $P^-_k$ of the error covariance at time K. In one embodiment,

Karlman filter calculation module 614 updates the error covariance $P_k$ at time k according to equation (9-5) as following:

$$P_k = [1 - K_k H_k] P_k^- \qquad (9\text{-}5)$$

After the updated state vector $X_k$ is validated, the updated state vector $X_k$ is sent to application module 514 for further processing. Furthermore, at the next time (k+1), the updated state vector $X_k$ and error covariance $P_k$ at time k can be used as the value of the previous time to update the state vector $X_{(k+1)}$ and error covariance $P_{(k+1)}$ at time (k+1). The procedures for updating the state vector $X_{(k+1)}$ and error covariance $P_{(k+1)}$ at time (k+1) is similar to blocks 704-714 which will not be described again for clarity and brevity.

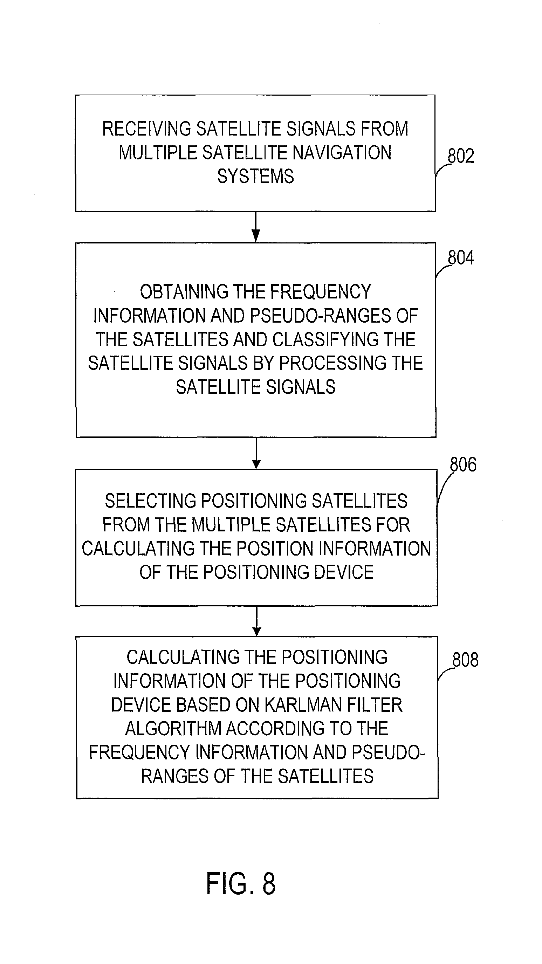

FIG. 8 illustrates a method for satellite positioning, in accordance with one embodiment of the present teaching. FIG. 8 is illustrated in combination with FIG. 5.

At block 802, positioning device 500 receives multiple satellite signals from multiple satellite navigation systems. More specifically, as illustrated in FIG. 5, positioning device 500 receives satellites signals from satellites 5021~502J of first satellite navigation system 502 and 5041~504K of satellite navigation system 504. It is to understood that, first satellite navigation system 502 and second satellite navigation system 504 illustrated in FIG. 5 are merely illustrative, and satellite signals from more satellite navigation systems can be received by positioning device 500.

At block 804, positioning device 500 calculates the frequencies and the pseudo-ranges of the satellites, and obtains the classification information of the satellite signals. More specifically, RF module 508 in positioning device 500 mixes the frequencies of the received satellite signals with a frequency of a signal generated by positioning device 500 to generate intermediate frequency (IF) signals. After being amplified and converted by an A/D device (not shown in FIG. 5), the converted IF signals are transmitted to baseband signal processing module 510. Baseband signal processing module 510 captures, tracks, and decodes the received IF signals, and obtains the frequency information and the pseudo-ranges of the satellites to classify the satellite signals. For example, positioning device 500 can identify a satellite navigation system from which a received satellite signal is transmitted according to a pseudo-random number sequence, i.e., the parameter C in equation (6). The detailed steps for the identification will not be described repetitively for clarity and brevity.

At block 806, positioning device 500 selects the positioning satellites for calculating the position information (e.g., the location information and the velocity information) of positioning device 500 from satellites 5021~502J and 5041~504K. For example, satellite selection module 602 in positioning device 500 selects the positioning satellites according the factors, such as the satellite signal strength, the satellite elevation angle, and the tracking quality, etc. In operation, satellite selection module 602 determines if the satellites of a satellite navigation system (e.g., first satellite navigation system 502) are enough for calculating the navigation information. More specifically, satellite selection module 602 determines if the satellites in a satellite navigation system are enough for calculating the desired navigation information of positioning device 500 according to factors, such as the signal strength of the satellites in the satellite navigation system, the number of available satellites in the satellite navigation system, and the dilution of precision (DOP) of the satellite navigation system, etc. If satellite selection module 602 determines that the satellites from one satellite navigation system are enough for calculating the navigation information of positioning device 500, satellite selection module 602 may not select the satellites from other satellite navigation systems; otherwise, satellite selection module 602 may further select the satellites from other satellite navigation systems (e.g., first navigation satellite system 504).

At block 808, when the positioning satellites are selected, satellite selection module 602 outputs the frequency information and the pseudo-ranges of the positioning satellites to Karlman filter 604. Karlman filter 604 calculates the positioning information of positioning device 500 based on Karlman filter algorithm according to the received frequency information and the pseudo-ranges.

More specifically, initial state calculation module 612 in Karlman filter 604 calculates the initial state vector $X_0$ and initial error covariance $P_0$ of Karlman filter. In one embodiment, for a multi-mode navigation system, the state vector X can be defined as $X=[p_x, p_y, p_z, v_x, v_y, v_z, b_{u1}, b_{u2}... b_{uM}, c\dot{t}_u]$. M indicates the number of the satellite navigation systems for calculation and is greater than 1. $(p_x, p_y, p_z)$ is the position of positioning device 500 in the ECEF coordinate. $(v_x, v_y, v_z)$ is the velocity of positioning device 500 in the ECEF coordinate. $(b_{u1}, b_{u2}... b_{uM})$ are displacements of positioning device 500 corresponding to the clock biases between positioning device 500 and the satellite navigation systems, respectively. $\dot{t}_u$ represents a timing variation rate of the clock in positioning device 500, i.e., the rate of clock variation in positioning device 500, and c is the velocity of light. Therefore, for M satellite navigation systems, the length of the state vector is (7+M).

When the initialization is finished, Karlman filter calculation module 614 in Karlman filter 604 determines the observation vector Z of Karlman filter at the present time K. As mentioned above, the observation vector Z includes the pseudo-ranges of the positioning satellites and the components of the velocity vectors of positioning device 500 from positioning device 500 to the positioning satellites. That is, $Z = [\rho_{11}, \cdots \rho_{1m}, ... \rho_{M1}, ... \rho_{Mp}, d_{11}, \cdots d_{1m}, ... d_{M1}, ... d_{Mp}]^T$ The observation vector Z has a length of 2*N, N is the number of the positioning satellites, and N=m+...+p, m is the number of positioning satellites in the first satellite navigation system, and p is the number of positioning satellites in the Mth satellite navigation system. M is the number of the satellite navigation systems.

Then, Karlman filter calculation module 614 calculates the estimated value of the state vector at time K according to the value of the state vector at the previous time (k-1). And Karlman filter calculation module 614 calculates the estimated value of the error covariance $P^-_k$ at time k according to the value of the error covariance at the previous time (k-1).

After that, Karlman filter calculation module 614 calculates Karlman filter gain $K_k$ at time K according to the estimated value of the error covariance $P^-_k$ at time k.

Then, Karlman filter calculation module 614 updates the state vector $X_k$ at time K according to Karlman filter gain $K_k$, the estimated value of the state vector $X^-_k$ at time K, and the observation vector Z at the present time K. Karlman filter calculation module 614 further updates the error covariance $P_k$ at time k according to Karlman filter gain $K_k$ and the estimated value $P^-_k$ of the error covariance at time K. After the updated state vector $X_k$ is validated, the updated state vector $X_k$ is sent to the application module 514 for further processing.

Furthermore, at the next time (k+1), the updated state vector $X_k$ and error covariance $P_k$ at time k can be used as the value of the previous time to update the state vector $X_{(k+1)}$ and error covariance $P_{(k+1)}$ at time (k+1). The procedures for updating the state vector $X_{(k+1)}$ and error covariance $P_{(k+1)}$ at time (k+1) is similar to the steps for updating state vector $X_k$ and error covariance $P_k$ at time k, which will not be described again for clarity and brevity.

While the foregoing description and drawings represent embodiments of the present teaching, it will be understood that various additions, modifications and substitutions may be made therein without departing from the spirit and scope of the principles of the present teaching as defined in the accompanying claims. One skilled in the art will appreciate that the teaching may be used with many modifications of form, structure, arrangement, proportions, materials, elements, and components and otherwise, used in the practice of the teaching, which are particularly adapted to specific environments and operative requirements without departing from the principles of the present teaching. The presently disclosed embodiments are therefore to be considered in all respects as illustrative and not restrictive, the scope of the teaching being indicated by the appended claims and their legal equivalents, and not limited to the foregoing description.

**Claims**

1. A positioning module comprising:

   a satellite selection module, configured for selecting one or more positioning satellites among a plurality of satellites of one or more satellite navigation systems and outputting satellite information of the one or more positioning satellites; and
   a filter coupled to the satellite selection module, configured for receiving the satellite information of the one or more positioning satellites, and calculating a position information of the positioning module and/or a device comprising the positioning module.

2. Positioning module of claim 1, wherein the satellite information comprises one or more of signal frequency, pseudo-range, position coordinates, and velocity information of a corresponding positioning satellite.

3. Positioning module of one of claims 1 or 2, wherein the filter comprises a Karlman filter and wherein calculating the position information comprises calculating the position information based on a Karlman filter algorithm.

4. Positioning module of claim 3, wherein the Karlman filter comprises:

   an initial state calculation module, configured for calculating an initial state vector and an error covariance of the Karlman filter according to the satellite information of the one or more positioning satellites; and
   a Karlman filter calculation module, configured for calculating a state vector at a present time based on the Karlman filter algorithm, wherein the state vector comprises the position information.

5. Positioning module of claim 4, wherein the state vector comprises a location information of the positioning module and/or the device, a velocity information of the positioning module and/or the device, displacements of the positioning module and/or the device corresponding to clock biases between the positioning module and/or the device and the plurality of satellite navigation systems, and a timing variation rate of a clock in the positioning module and/or the device.

6. Positioning module of one of claims 4 or 5, wherein the state vector has (7+M) dimensions, M being the number of satellite navigation systems from which the one or more positioning satellites are selected.

7. Positioning module of one of claims 4 to 6, wherein the Karlman filter calculation module updates the state vector at the present time based on the Karlman filter algorithm according to a state vector at a previous time and an observation vector at the present time, wherein the observation vector comprises pseudo-ranges of the one or more positioning satellites and component of a velocity vector of the positioning module and/or the device from the positioning module and/or the device to the one or more positioning satellites.

8. Positioning module of claim 7, wherein the observation vector has 2*N dimensions, N being the number of positioning satellites.

9. A positioning device, comprising:

   a radio frequency (RF) module, configured for mixing frequencies of a plurality of received satellite signals with a frequency of a signal generated by positioning device to generate a plurality of intermediate frequency (IF) signals, wherein the plurality of received satellite signals are transmitted by one or more satellites of one or more satellite navigation systems;
   a baseband signal processing module, configured for processing the plurality of IF signals, calculating a satellite information of the one or more satellites, and classifying the plurality of received satellite signals; and
   a positioning module according to one of claims 1 to 8 coupled to the baseband signal processing module, configured for calculating the position information of the positioning device.

10. Positioning device of claim 9, wherein calculating the positioning information of the positioning device comprises calculating the positioning information based on a Karlman filter algorithm according to the satellite information of the one or more positioning satellites.

11. A positioning method for a positioning device, comprising:

receiving a plurality of satellite signals, wherein the plurality of satellite signals are transmitted by one or more satellites of one or more satellite navigation systems;
calculating, by capturing and tracking the satellite signals, a satellite information of the one or more satellites and classifying the plurality of satellite signals;
selecting one or more positioning satellites from the one or more satellites according to a classification of the plurality of satellite signals; and
calculating a position information of the positioning device.

12. The positioning method of claim 11, wherein calculating the position information comprises calculating the position information based on a Karlman filter algorithm according to the satellite information of the one or more positioning satellites;
determining an observation vector at a present time of a Karlman filter, wherein the observation vector comprises pseudo-ranges of the one or more positioning satellites and component of a velocity vector of the one or more positioning satellites from the positioning device to the positioning satellites; and
updating a state vector at the present time based on the Karlman filter algorithm according to a state vector at a previous time and the observation vector at the present time, wherein the state vector comprises a location information of the positioning device, velocity information of the positioning device, displacements of the positioning device corresponding to clock biases between the positioning device and the one or more satellite navigation systems, and a timing variation rate of a clock in the positioning device.

13. The positioning method of claim 12, wherein updating the state vector at the present time based on the Karlman filter algorithm according to the state vector at the previous time and the observation vector at the present time comprises:

calculating an estimated value of the state vector at the present time according to the state vector at the previous time;
calculating an estimated value of an error covariance at the present time according to an error covariance at the previous time;
calculating a Karlman filter gain according to the estimated value of the error covariance at the present time; and
updating the state vector at the present time according to the Karlman filter gain, the estimated value of the state vector at the present time, and the observation vector at the present time.

14. The positioning method of claim 13, wherein the step of calculating the position information of positioning device further comprises:

updating the error covariance at the present time according to the Karlman filter gain and the estimated value of the error covariance at the present time.

15. The positioning method of one of claims 13 or 14, further comprising:

calculating a state vector at a next time according to the error covariance at the present time and the state vector at the present time.

16. The positioning method of one of claims 12 to 15, wherein the observation vector has 2*N dimensions, N bring the number of the positioning satellites.

17. The positioning method of one of claims 12 to 16, wherein the state vector has (7+M) dimensions, M being the number of satellite navigation systems from which the one or more positioning satellites are selected.

100

FIG. 1

S10

RECEIVE ONE OR MORE SIGNALS DIRECTED TO NAVIGATION

S20

DETERMINE ONE OR MORE NAVIGATION SYSTEMS FROM WHERE THE ONE OR MORE SIGNALS ARE SENT

S30

OBTAIN NAVIGATION INFORMATION ASSOCIATED WITH THE DETERMINED ONE OR MORE NAVIGATION SYSTEMS BASED ON THE ONE OR MORE SIGNALS

FIG. 2

S171

DISTRIBUTE RESOURCES FOR THE DETECTED POSITIONING SATELLITES

S172

CAPTURE AND TRACK THE POSITIONING SATELLITES WITH DISTRIBUTED RESOURCES TO OBTAIN SATELLITE INFORMATION

S174

CALCULATE POSITION INFORMATION, VELOCITY INFORMATION, AND A DISPLACEMENT OF THE RECEIVER CORRESPONDING TO EACH CLOCK BIAS BETWEEN THE RECEIVER AND EACH SATELLITE NAVIGATION SYSTEM ACCORDING TO THE RECEIVED SATELLITE INFORMATION

FIG. 3

FIG. 4

SATELLITE 1 — 5022
SATELLITE J — 502J
502

SATELLITE 1 — 5041
SATELLITE K — 504K
504

506

SATELLITE SIGNAL

POSITIONING DEVICE — 500

RF MODULE — 508
IF SIGNAL

BASEBAND SIGNAL PROCESSING MODULE — 510

POSITIONING MODULE — 512
NMEA

APPLICATION MODULE — 514

FIG. 5

EP 2 806 289 A1

FIG. 6

INITIALIZATION FINISHED? _702

N

DETERMINING THE OBSERVATION VECTOR OF THE KARLMAN FILTER _704

INITIALIZING THE KARLMAN FILTER ACCORDING TO THE LEAST SQUARE ALGORITHM _703

CALCULATING THE ESTIMATED VALUE OF THE STATE VECTOR AT TIME K ACCORDING TO THE VALUE OF THE STATE VECTOR AT THE PREVIOUS TIME (K-1) _706

CALCULATING THE ESTIMATED VALUE OF THE ERROR COVARIANCE AT TIME K ACCORDING TO THE VALUE OF THE ERROR COVARIANCE AT THE PREVIOUS TIME (K-1) _708

OBTAINING THE INITIAL STATE VECTOR AND THE INITIAL ERROR COVARIANCE _705

CALCULATING THE KARLMAN FILTER GAIN _710

UPDATING THE STATE VECTOR ACCORDING TO THE KARLMAN FILTER GAIN, THE ESTIMATED VALUE OF THE STATE VECTOR, AND THE OBSERVATION VECTOR AT THE PRESENT TIME _712

UPDATING THE ERROR COVARIANCE ACCORDING TO THE KARLMAN FILTER GAIN AND THE ESTIMATED VALUE OF THE ERROR COVARIANCE _714

FIG. 7

RECEIVING SATELLITE SIGNALS FROM MULTIPLE SATELLITE NAVIGATION SYSTEMS — 802

OBTAINING THE FREQUENCY INFORMATION AND PSEUDO-RANGES OF THE SATELLITES AND CLASSIFYING THE SATELLITE SIGNALS BY PROCESSING THE SATELLITE SIGNALS — 804

SELECTING POSITIONING SATELLITES FROM THE MULTIPLE SATELLITES FOR CALCULATING THE POSITION INFORMATION OF THE POSITIONING DEVICE — 806

CALCULATING THE POSITIONING INFORMATION OF THE POSITIONING DEVICE BASED ON KARLMAN FILTER ALGORITHM ACCORDING TO THE FREQUENCY INFORMATION AND PSEUDO-RANGES OF THE SATELLITES — 808

FIG. 8

FIG. 9

Europäisches
Patentamt

European
Patent Office

Office européen
des brevets

# EUROPEAN SEARCH REPORT

**Application Number**

EP 14 16 5622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/038512 A1 (GESWENDER CHRIS E [US] ET AL) 16 February 2012 (2012-02-16) * paragraphs [0020], [0021], [0026] - [0030]; figures 2A,2B,4 * | 1-4,7, 9-11 | INV. G01S19/33 G01S19/42 |
| X | US 5 323 163 A (MAKI STANLEY C [US]) 21 June 1994 (1994-06-21) * column 5, line 30 - column 6, line 38; figure 6 * | 1-4,7, 9-11 | |
| X | US 2005/162307 A1 (KATO KOJI [JP]) 28 July 2005 (2005-07-28) | 11 | |
| Y | * paragraph [0065] - paragraph [0080]; figures 3,4 * | 1-10, 12-17 | |
| Y | ZHANG X ET AL: "Application of Kalman Filter to Beidou/GPS Joint-Positioning for Software Receiver", ITM 2012 - PROCEEDINGS OF THE 2012 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 1 February 2012 (2012-02-01), pages 1724-1766, XP056000950, * Section 3.2; page 1726 - page 1728 * | 1-10, 12-17 | TECHNICAL FIELDS SEARCHED (IPC) G01S |

-/--

The present search report has been drawn up for all claims

| Place of search | Date of completion of the search | Examiner |
|---|---|---|
| Munich | 7 October 2014 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 806 289 A1**

Europäisches Patentamt
European Patent Office
Office européen des brevets

# EUROPEAN SEARCH REPORT

Application Number

EP 14 16 5622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIN LING ET AL: "An adaptive interacting Multiple Model filter for GNSS-based civil aviation", AEROSPACE&ELECTRONICS CONFERENCE (NAECON), PROCEEDINGS OF THE IEEE 2009 NATIONAL, IEEE, PISCATAWAY, NJ, USA, 21 July 2009 (2009-07-21), pages 131-138, XP031646512, ISBN: 978-1-4244-4494-6 * Section II; page 132 - page 34 * | 1-10, 12-17 | |
| X | US 2001/048387 A1 (SHEYNBLAT LEONID [US]) 6 December 2001 (2001-12-06) * abstract; figure 3 * | 11 | |
| A | | 1-10, 12-17 | |
| | | | TECHNICAL FIELDS SEARCHED (IPC) |

The present search report has been drawn up for all claims

| Place of search | Date of completion of the search | Examiner |
|---|---|---|
| Munich | 7 October 2014 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 16 5622

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2014

| Patent document cited in search report | | Publication date | Patent family member(s) | | | Publication date |
|---|---|---|---|---|---|---|
| US 2012038512 | A1 | 16-02-2012 | EP | 2294438 | A1 | 16-03-2011 |
| | | | JP | 2011521258 | A | 21-07-2011 |
| | | | US | 2012038512 | A1 | 16-02-2012 |
| | | | WO | 2009142729 | A1 | 26-11-2009 |
| US 5323163 | A | 21-06-1994 | NONE | | | |
| US 2005162307 | A1 | 28-07-2005 | DE | 102005002964 | A1 | 11-08-2005 |
| | | | JP | 2005207888 | A | 04-08-2005 |
| | | | US | 2005162307 | A1 | 28-07-2005 |
| US 2001048387 | A1 | 06-12-2001 | AT | 470874 | T | 15-06-2010 |
| | | | AU | 4928801 | A | 03-10-2001 |
| | | | CA | 2404109 | A1 | 27-09-2001 |
| | | | CN | 1429344 | A | 09-07-2003 |
| | | | CN | 101408605 | A | 15-04-2009 |
| | | | CN | 101950022 | A | 19-01-2011 |
| | | | EP | 1272869 | A2 | 08-01-2003 |
| | | | EP | 2163913 | A1 | 17-03-2010 |
| | | | ES | 2345708 | T3 | 30-09-2010 |
| | | | HK | 1054988 | A1 | 03-02-2012 |
| | | | JP | 2004502135 | A | 22-01-2004 |
| | | | JP | 2012211907 | A | 01-11-2012 |
| | | | MX | PA02009200 | A | 23-05-2003 |
| | | | US | 2001048387 | A1 | 06-12-2001 |
| | | | US | 2004183724 | A1 | 23-09-2004 |
| | | | WO | 0171375 | A2 | 27-09-2001 |

EPO FORM P0459

For more details about this annex : see Official Journal of the European Patent Office, No. 12/82